# FASCICULE DE BREVET EUROPEEN

(11) **EP 2 863 171 B1**
(45) Date de publication et mention de la délivrance du brevet: **04.09.2019**
(21) Numéro de dépôt: 14189259.6
(22) Date de dépôt: 16.10.2014
(51) Int. Cl.: G01B 21/04, B25J 19/02

(54) **Procédé de mesure avec amélioration de la précision de l'acquisition d'un point de mesure**
Messverfahren mit Verbesserung der Erfassungspräzision eines Messpunktes
Measurement method with improved precision in measurement point capture

(30) Priorité: 18.10.2013 FR 1360204
(43) Date de publication de la demande: 22.04.2015
(73) Titulaire: Hexagon Metrology SAS, 91978 Courtaboeuf Cedex (FR)
(72) Inventeur: Desforges, Laurent, 41310 AMBLOY (FR)
(74) Mandataire: Lavialle, Bruno François Stéphane

(56) Documents cités:
- WO-A1-2009/130169
- US-B1- 6 668 466
- SHIMOJIMA K ET AL: "The estimation method of uncertianty of articulated coordinate measuring machine", INDUSTRIAL TECHNOLOGY, 2002. IEEE ICIT '02. 2002 IEEE INTERNATIONAL CO NFERENCE ON DEC. 11-14, 2002, PISCATAWAY, NJ, USA,IEEE, PISCATAWAY, NJ, USA, vol. 1, 11 décembre 2002 (2002-12-11), pages 411-415, XP010637341, DOI: 10.1109/ICIT.2002.1189931 ISBN: 978-0-7803-7657-1

## Description

### DOMAINE DE L'INVENTION

La présente invention concerne le domaine de la métrologie par coordonnées et plus particulièrement les bras de mesure tridimensionnelle.

### ETAT DE LA TECHNIQUE

Une machine à mesurer tridimensionnelle est un instrument de mesure utilisé en métrologie dimensionnelle dont la fonction est d'acquérir les coordonnées de différents points d'une pièce à mesurer afin par exemple de vérifier la conformité des cotes, de la géométrie et ou des formes de la pièce.

De telles machines comprennent généralement une base sur laquelle est monté un bras de mesure à l'extrémité duquel se trouve une tête de mesure. Le bras de mesure est classiquement constitué de segments rigides reliés entre eux par exemple au moyen de pivots et/ou de rotules pourvus de codeurs mesurant avec précision les déplacements des segments les uns par rapport aux autres. La tête de mesure possède des moyens d'acquisition d'un point sur un objet à mesurer.

Il existe deux types principaux de têtes de mesure selon que la mesure est effectuée par contact ou sans contact avec la pièce. Dans les têtes de mesure par contact, la tête de mesure comprend un palpeur pour venir en contact avec la pièce. L'acquisition des coordonnées est commandée soit automatiquement par détection de la mise en contact du palpeur avec la surface de la pièce soit par l'opérateur au moyen d'un bouton de commande que l'opérateur actionne lorsque le palpeur est contact de la zone recherchée de la pièce. Dans les têtes de mesure sans contact, la tête de mesure intègre un capteur optique (scanner) comprenant généralement une diode laser de pointage qui illumine une petite zone de la surface de la pièce à mesurer et une caméra qui réalise une acquisition de la lumière réfléchie et en déduit la mesure de distance par calcul du déphasage entre le signal lumineux émis et celui qui est réfléchi par la surface de la pièce à mesurer. La commande de l'acquisition peut être effectuée en continue ou ponctuellement par l'opérateur au moyen d'un bouton de commande que l'opérateur actionne lorsque le palpeur est contact de la zone recherchée de la pièce.

Lors de la commande de l'acquisition, les positions relatives des différents segments du bras de mesure sont enregistrées dans la mémoire d'une unité de traitement reliée au bras de mesure. L'unité de traitement est agencée pour déterminer les coordonnées des points de mesure dans un référentiel, généralement attaché à la base, à partir des dimensions des segments, de leurs positions relative et des informations de la tête de mesure. Un traitement adapté de ces coordonnées permet d'en extraire des cotes, forme et géométrie de la pièce à mesurer.

Les codeurs angulaires attachés aux extrémités des segments rigides sont par exemple des codeurs à points. Ces codeurs comprennent généralement un plateau circulaire marqué de plusieurs points équidistants tous situés sur un même cercle. Lors d'une rotation, un capteur -magnétique ou optique selon la nature des points- compte le nombre de points qui défilent devant sa cellule de comptage et en déduit l'amplitude de la rotation effectuée. Un bras de mesure comprend généralement quatre codeurs angulaires :
- un premier codeur mesure la rotation selon un axe vertical du premier segment rigide du bras de mesure par rapport à la base rigide;
- un deuxième codeur mesure la rotation selon un axe horizontal du premier segment rigide du bras de mesure par rapport à la base rigide;
- un troisième codeur mesure la rotation selon un axe horizontal d'un deuxième segment rigide du bras de mesure par rapport au premier segment rigide du bras de mesure sur lequel il est articulé;
- un quatrième codeur mesure la rotation selon un axe horizontal de la tête de mesure par rapport au deuxième segment rigide du bras de mesure sur lequel elle est montée.

Il existe de nombreux facteurs susceptibles d'impacter la précision d'une mesure parmi lesquels :
- les jeux axiaux et radiaux des axes des roulements des articulations des bras ;
- la flexion des segments dont la rigidité n'est pas absolue ;
- la résolution de chaque codeur.

L'erreur générée par ces différents facteurs peut augmenter avec l'amplitude des déplacements des divers éléments du bras de mesure. D'une manière générale, plus la variation de position de chacun des éléments constituant le bras (segments, articulations, codeurs, etc..) est importante, plus l'erreur de mesure est pénalisante.

Ainsi, lors du passage d'un point de mesure à un autre, les imprécisions de toutes origines s'additionnent et il en résulte une imprécision globale sur la détermination des coordonnées des points de mesure et donc de la caractéristique géométrique que l'on cherche à mesurer comme la distance entre les points de mesure.

Le document "The estimation Method of Uncertainty of Articulated coordinate measuring machine" de Ken Shimojima et al. dans "Industrial technology IEEE ICIT 2002", Vol.1, pages 411 - 415 décrit une méthode de détermination de la précision spécifique d'un bras de mesure. Les documents US 6,668,466 B1 et WO 2009/130169 décrivent un procédé de mesure de la positions d'un élément par un bras de mesure.

### OBJET DE L'INVENTION

Un but de l'invention est d'augmenter la précision affectant l'acquisition des coordonnées de points de mesure par un bras de mesure.

### RESUME DE L'INVENTION

A cet effet, on prévoit un procédé de mesure d'une pièce par un bras de mesure articulé comprenant une tête de mesure pourvue d'un organe de pointage et au moins un codeur rotatif, comprenant les étapes comme définies dans la revendication 1.

Ainsi, l'opérateur du bras de mesure dispose d'une information relative à la précision de la mesure qu'il vient d'effectuer et peut donc adapter la façon dont il manipule le bras de mesure de manière à réduire cette imprécision.

Selon un mode de réalisation avantageux, le procédé de mesure selon l'invention comprend l'étape supplémentaire de transmettre à un opérateur chargé de la manipulation du bras de mesure articulé un indicateur relatif à la précision déterminée.

L'opérateur peut alors juger de la nécessité de reprendre ou non la mesure en modifiant la deuxième position de mesure du bras afin d'obtenir une précision de l'acquisition ayant une valeur supérieure à un seuil prédéterminé.

Selon un autre mode de réalisation, le procédé selon l'invention comprend l'étape supplémentaire de déterminer une deuxième position de mesure du bras de mesure articulé aboutissant à une précision de l'acquisition ayant une valeur supérieure à un seuil prédéterminé.

Une fois ce mouvement déterminé et transmis à l'opérateur, celui-ci dispose d'informations lui permettant de reprendre la mesure en manipulant le bras de mesure de manière à ce qu'il adopte la position déterminée et atteigne le niveau de précision souhaité.

L'invention concerne également un bras de mesure articulé comprenant une tête de mesure et au moins un codeur rotatif reliés à une unité de traitement, l'unité de traitement est agencée pour mettre en oeuvre le procédé ci-dessus.

### BREVE DESCRIPTION DES DESSINS

Il sera fait référence aux figures annexées parmi lesquelles :
- la figure 1 est une représentation schématique en perspective d'un bras de mesure mettant en oeuvre un premier mode de réalisation du procédé selon l'invention ;
- la figure 2 est une représentation schématique en perspective d'un bras de mesure dans une étape du premier mode de réalisation du procédé selon l'invention qui suit celle de la figure 1 ;
- la figure 3 est un logigramme des étapes du premier mode de réalisation du procédé selon l'invention ;
- la figure 4 est une représentation schématique en perspective d'un bras de mesure mettant en oeuvre un deuxième mode de réalisation du procédé selon l'invention ;
- la figure 5 est une représentation schématique en perspective d'un bras de mesure dans une étape du deuxième mode de réalisation du procédé selon l'invention qui suit celle de la figure 4 ;
- la figure 6 est un logigramme des étapes du deuxième mode de réalisation du procédé selon l'invention.

### DESCRIPTION DETAILLEE DE L'INVENTION

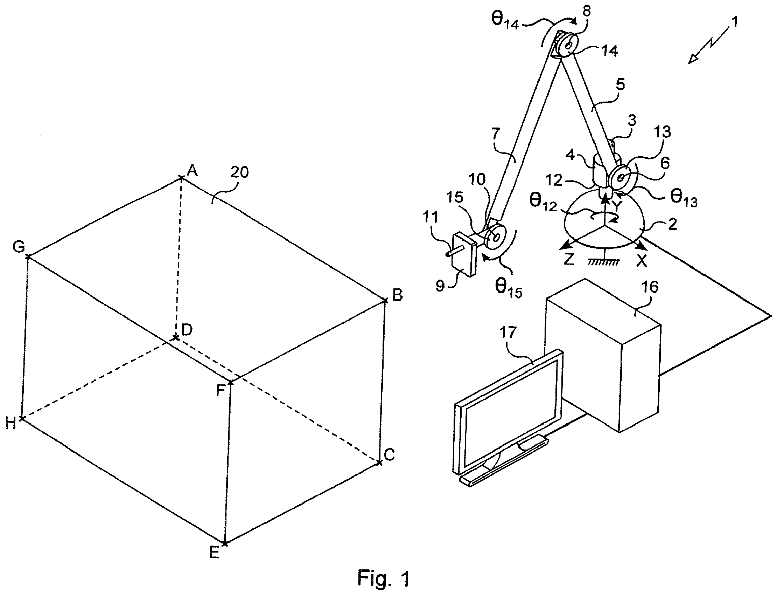

En référence à la figure 1, le bras articulé selon l'invention, généralement désigné 1, comprend une base fixe 2 liée à un support comme une table ou le sol et qui porte un arbre vertical 3 sur lequel est monté à rotation un palier 4. Une première extrémité d'un premier segment de bras 5 est articulée sur le palier 4 à l'aide d'une liaison pivot 6 d'axe horizontal. La seconde extrémité du premier segment de bras 5 reçoit un deuxième segment de bras 7 articulé en une de ses extrémités autour d'un pivot 8 selon un axe horizontal. L'autre extrémité du deuxième segment 7 du bras de mesure 1 reçoit une tête de pointage 9 -ici une tête comportant un palpeur 11- elle aussi articulée selon un pivot 10 d'axe horizontal. Le bras de mesure 1 est ici un bras manuel dans le sens où le déplacement de celui-ci est réalisé par un opérateur manipulant la tête de pointage 9 et qu'aucune de ses articulations n'est motorisée. L'arbre vertical 3 ainsi que chaque segment de bras 5 et 7 possède respectivement une rigidité K3, K5 et K7 établie lors de la conception du bras de mesure et validée par des mesures lors de la fabrication du bras de mesure 1.

Le palier 4 ainsi que les pivots 6, 8 et 10 sont respectivement pourvus d'un codeur rotatif absolu 12, 13, 14 et 15 de type optique mesurant respectivement les angles de rotation θ₁₂, θ₁₃, θ₁₄ θ₁₅ de chacune des articulations du bras de mesure 1. Ces codeurs sont reliés à une unité de traitement 16, elle-même reliée à des moyens d'affichage, ici un écran 17. L'unité de traitement 16 reçoit les valeurs θ₁₂, θ₁₃, θ₁₄, θ₁₅ et, sur la base des dimensions des segments 5 et 7 de bras de mesure, de l'arbre vertical 3 et de la distance séparant l'extrémité du palpeur 11 de l'extrémité du segment de bras 7, détermine les coordonnées du point de mesure en cours d'acquisition dans un repère orthogonal Oxyz lié à la base fixe 2. A partir des coordonnées de plusieurs points, l'unité de traitement 16 calcule les distances séparant les points de mesure et/ou la géométrie de la pièce mesurée. Le palier 4 ainsi que les pivots 6, 8 et 10 comprennent au moins un axe d'articulation dont les jeux axiaux et radiaux respectifs Jax6/Jrad6, Jax8/Jrad8, Jax10/Jrad10 sont déterminés et calibrés lors de la fabrication.

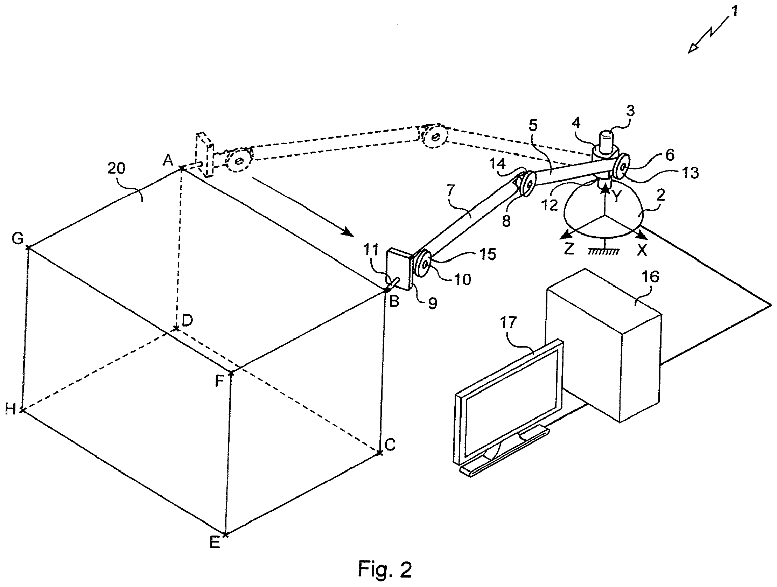

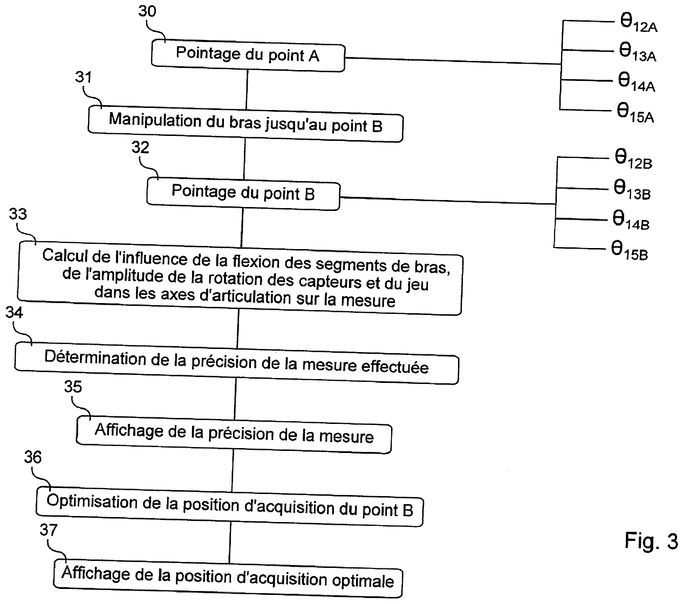

En référence aux figures 1 à 3, le procédé selon l'invention est décrit dans une application dans laquelle le bras de mesure 1 est utilisé pour réaliser un contrôle dimensionnel d'une pièce parallélépipédique 20 par l'acquisition des coordonnées de ses huit sommets A, B, C, D, E, F, G, H. Selon la première étape 30 du procédé de mesure selon l'invention, l'opérateur manipule le bras de mesure 1 de manière à mettre en contact l'extrémité du palpeur 11 sur le sommet A. Le bras de mesure est alors dans une première position de mesure de la position du point A représentée en traits discontinus sur la figure 2. L'acquisition de cette position est validée par l'actionnement d'un bouton de commande monté sur la tête de pointage 9. Les valeurs θ_{12A}, θ_{13A}, θ_{14A}, θ_{15A} des codeurs attachés aux articulations du bras de mesure 1 lors de l'acquisition de la position du point A sont alors mémorisées par l'unité de traitement 16. L'opérateur manipule ensuite le bras de mesure 1 jusqu'à une deuxième position de mesure pour pointer un deuxième point B de la pièce 20 (étape 31). Cette deuxième position de mesure du bras de mesure 1 est représentée en traits pleins sur la figure 2. Au cours de cette manipulation, l'opérateur modifie les positions relatives de l'arbre 3 et des segments 5, 7 et 9 du bras de mesure 1 qui correspondent aux valeurs θ_{12B}, θ_{13B}, θ_{14B}, θ_{15B} des codeurs attachés aux articulations du bras de mesure 1. Ces valeurs sont mémorisées par l'unité de traitement 16 lors de la validation du pointage de la position du point B (étape 32). Au cours de l'étape 33, l'unité de traitement 16, calcule pour chaque position de mesure du bras 1, les géométries de l'arbre 3 et des segments 5 et 7 provoquées par leur flexion en fonction de leur rigidité respectives K3, K5 et K7. L'unité de traitement 16 calcule également les effets des jeux axiaux et radiaux Jax6/Jrad6, Jax8/Jrad8, Jax10/Jrad10 des articulations 6, 8 et 10 ainsi que l'influence de l'amplitude de la rotation des codeurs 12 à 15 sur la position du bras de mesure pour chacune des positions de mesure.

Ce calcul est réalisé à l'aide d'une modélisation par éléments finis 17 de chaque élément constituant le bras de mesure 1 parmi lesquels l'arbre 3, les segments 5 et 7, les articulations 6, 8, 10 et les codeurs 15 à 12. L'unité de traitement 16 simule la première position de mesure et la deuxième position de mesure du bras de mesure 1 en utilisant les valeurs θ_{12A}, θ_{13A}, θ_{14A}, θ_{15A} et θ_{12B}, θ_{13B}, θ_{14B}, θ_{15B} des codeurs et compare la mesure de distance AB obtenue avec celle que délivrerait un modèle théorique parfait du bras de mesure 1 (c'est-à-dire dépourvu de jeux, composé d'éléments infiniment rigides et dont la résolution des codeurs est constante). L'unité de traitement 16 calcule alors une précision de la mesure de la distance AB correspondant à la différence existant entre le modèle parfait et le modèle simulé (étape 34). L'unité de traitement 16 envoie ensuite une instruction d'affichage vers l'écran 17 (étape 35) d'un indicateur relatif à la précision de la mesure effectuée. Cet indicateur peut consister en une valeur numérique (pourcentage) de la précision attachée aux mesures selon chacun des axes Ox, Oy, Oz du repère orthogonal Oxyz ou de la précision de la distance mesurée. Alternativement un indicateur qualitatif sous la forme d'un signal coloré (par exemple vert ou rouge) ou d'un bip de validation permet à l'opérateur de déterminer si la précision de la mesure effectuée se situe dans une plage conforme aux exigences spécifiques préalablement renseignées dans l'unité de traitement. Selon un mode de réalisation particulier correspondant aux étapes supplémentaires 36 et 37, l'unité de traitement 16 analyse les positions des points A et B acquis et détermine une deuxième position de mesure du bras de mesure 1 correspondant à l'acquisition du point B et aboutissant à une précision dont la valeur est au delà d'une valeur seuil déterminée, voire d'une précision maximale. Cette position est déterminée par l'unité de traitement 16 à l'aide d'itérations dans la simulation 17 aboutissant à la détermination d'une deuxième position de mesure du bras de mesure 1 pour laquelle la précision de l'acquisition de la distance AB est optimale ou supérieure à un niveau déterminé.

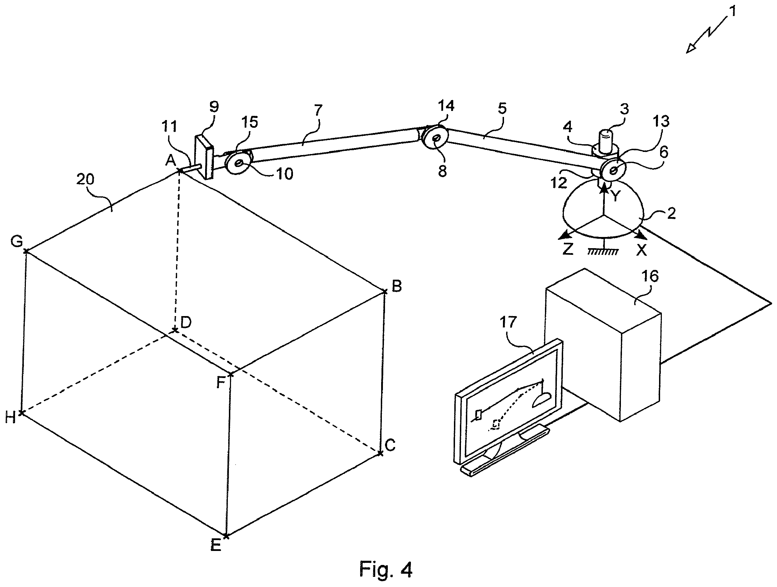

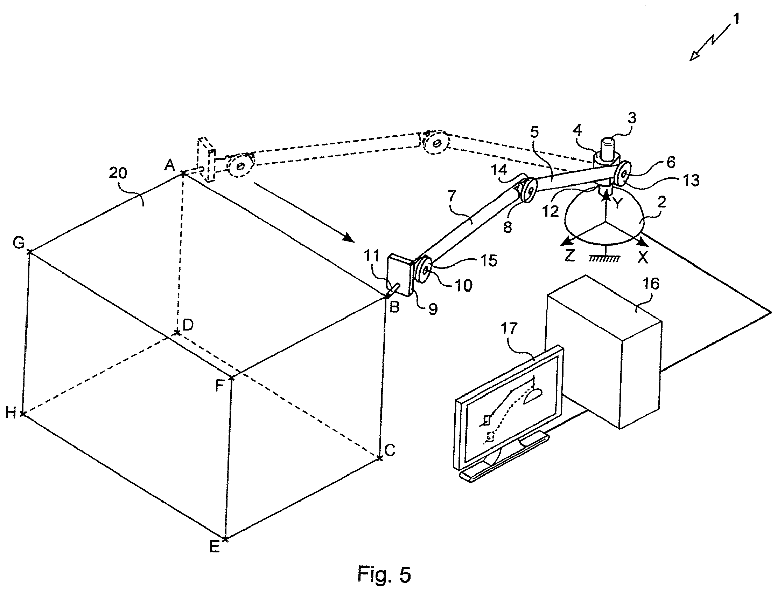

Selon un autre mode de réalisation et en référence aux figures 4 à 6, le bras de mesure 1 est utilisé pour réaliser le contrôle dimensionnel d'une pièce parallélépipédique 40 par l'acquisition des coordonnées de ses huit sommets A, B, C, D, E, F, G, H. Dans ce mode de réalisation, les positions théoriques des points A à H sont connues. Ce mode de réalisation correspond par exemple à un contrôle dimensionnel d'une pièce 40 de série. Préalablement au contrôle dimensionnel de la pièce 40, l'opérateur indique à l'unité de traitement 16 qu'il s'apprête à débuter les opérations de contrôle de la pièce connue 40 (étape 50). Une fois la position du premier point A acquise, l'unité de traitement 16 détermine alors la trajectoire du bras de mesure 1 depuis la position actuelle du bras de mesure 1 jusqu'au second point de mesure à acquérir (ici le point B) correspondant à une précision d'acquisition maximale (étape 51). L'unité de traitement 16 envoie alors vers l'afficheur 17 des instructions de manipulation à l'intention de l'opérateur (étape 52). Ces instructions correspondent ici à une représentation tridimensionnelle du bras de mesure 1 dans la deuxième position de mesure déterminée par l'unité de traitement 16. L'écran 17 comporte également une représentation tridimensionnelle du bras de mesure 1 dans sa position actuelle. L'opérateur doit alors faire coïncider les deux représentations. Cette situation est représentée à la figure 4.

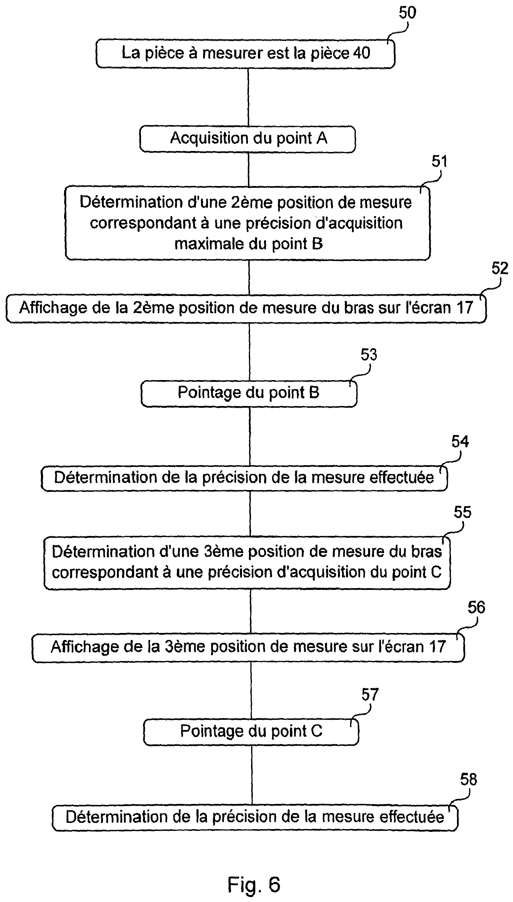

Une fois que l'opérateur a pointé le point B (étape 53), l'unité de traitement 16 détermine alors la position du bras de mesure 1 depuis sa position actuelle (point B) jusqu'à un troisième point de mesure (ici le point C) correspondant à une imprécision de mesure minimale (étape 54) et affiche alors sur l'écran 17 une représentation tridimensionnelle (étape 55) de cette position. Cette situation est représentée à la figure 6. Les opérations d'acquisition de la position des autres points D à H se font en répétant les étapes 53 à 55 autant de fois que nécessaire.

On obtient alors un procédé d'amélioration de l'acquisition d'un point de mesure permettant d'augmenter la précision affectant l'acquisition des coordonnées de points de mesure par un bras de mesure articulé.

Bien entendu, l'invention n'est pas limitée aux modes de réalisation décrits mais englobe toute variante entrant dans le champ de l'invention telle que définie par les revendications.

En particulier :
- bien qu'ici le bras de mesure repose sur une base fixe, l'invention s'applique également à un bras de mesure liée à une base mobile ;
- bien qu'ici le bras de mesure soit pourvu d'une tête d mesure à palpeur, l'invention s'applique à d'autres types de têtes de mesure telle que des têtes de mesure à capteur optique ;
- bien qu'ici, les instructions de manipulation du bras correspondent à une représentation tridimensionnelle de la position de l'extrémité du palpeur, l'invention s'applique également à d'autres types de représentations comme par exemple des déplacements élémentaires successifs de chacun des éléments du bras selon trois axes ou des déplacements élémentaires de chacune des articulations.

## Revendications

1. Procédé de mesure d'une pièce par un bras de mesure articulé (1) comprenant une tête de mesure (9) pourvue d'un organe de pointage et des segments de bras (3, 5, 7) reliés à des articulations (4, 6, 8, 10) pourvues respectivement d'au moins un codeur rotatif (12, 13, 14, 15), comprenant les étapes de :
- pointer un premier point de mesure sur la pièce, le bras de mesure (1) adoptant une première position de mesure ;
- manipuler le bras de mesure (1) jusqu'à une deuxième position de mesure pour pointer un deuxième point de mesure sur la pièce et acquérir une caractéristique géométrique de la pièce à partir des points de mesure ;
- déterminer une précision de l'acquisition effectuée de la caractéristique géométrique en fonction des première et deuxième positions de mesure du bras, la détermination de la précision de l'acquisition de la caractéristique géométrique comprenant les étapes suivantes :
- simuler les première et deuxième positions de mesure du bras de mesure (1) en utilisant un premier modèle simulé du bras de mesure (1) prenant en compte la flexion des segments de bras (3, 5, 7) et/ou les jeux (Jax6, Jrad6, Jax8, Jrad8, Jax10, Jrad10) dans les axes d'articulation et/ou la résolution du codeur rotatif (12, 13, 14, 15), et en déduire une première valeur de la caractéristique géométrique;
- simuler les première et deuxième positions de mesure du bras de mesure (1) en utilisant un deuxième modèle parfait du bras prenant en compte au moins des segments de bras infiniment rigides (3, 5, 7) et/ou des jeux (Jax6, Jrad6, Jax8, Jrad8, Jax10, Jrad10) nuls dans au moins un axe d'articulation et/ou une résolution du codeur rotatif (12, 13, 14, 15) constante, et en déduire une deuxième valeur de la caractéristique géométrique;
- calculer une différence entre la première et la deuxième mesure.

2. Procédé selon la revendication 1, comprenant l'étape supplémentaire de transmettre à un opérateur chargé de la manipulation du bras de mesure articulé (1) un indicateur relatif à la précision déterminée.

3. Procédé selon la revendication 2, dans lequel l'indicateur relatif à la précision de la mesure comprend un des signaux suivants : témoin lumineux coloré, valeur numérique, vibration, signal sonore.

4. Procédé selon la revendication 1, dans lequel le procédé comprend l'étape supplémentaire de déterminer une position de mesure du bras de mesure articulé (1) aboutissant à une précision de l'acquisition de la caractéristique géométrique ayant une valeur supérieure à un seuil prédéterminé.

5. Procédé selon la revendication 1, dans lequel, une mesure étant effectuée entre deux points dont les positions relatives théoriques sont connues, des instructions de manipulation sont fournies à l'opérateur de manière à réaliser, entre le premier point de mesure et le deuxième point de mesure, une trajectoire du bras de mesure articulé (1) correspondant à une précision maximale de l'acquisition des coordonnées de points de mesure.

6. Bras de mesure articulé (1) comprenant une tête de mesure (9) et des segments de bras (3, 5, 7) reliés à des articulations (4, 6, 8, 10) pourvues respectivement d' au moins un codeur rotatif (12, 13, 14, 15) reliés à une unité de traitement (16), **caractérisé en ce que** l'unité de traitement (16) est agencée pour déterminer une précision de l'acquisition effectuée d'une caractéristique géométrique en fonction de première et deuxième positions de mesure du bras conformément à l'une quelconque des revendications précédentes.

## Patentansprüche

1. Messverfahren zum Messen eines Teils mittels eines angelenkten Messarms (1), der einen Messkopf (9) umfasst, der mit einem Zielelement versehen ist, sowie Armsegmente (3, 5, 7), die mit Gelenkverbindungsachsen (4, 6, 8, 10) verbunden sind, die jeweils mit mindestens einem Drehgeber (12, 13, 14, 15) versehen sind, umfassend die Schritte:
- Zielen auf einen ersten Messpunkt auf dem Teil, wobei der Messarm (1) eine erste Messposition einnimmt;
- Betätigen des Messarms (1) bis in eine zweite Messposition, um auf einen zweiten Messpunkt auf dem Teil zu zielen, und Erfassen einer geometrischen Eigenschaft des Teils anhand der Messpunkte;
- Bestimmen einer Genauigkeit der durchgeführten Erfassung der geometrischen Eigenschaft in Abhängigkeit von der ersten und der zweiten Messposition des Arms, wobei die Bestimmung der Genauigkeit der Erfassung der geometrischen Eigenschaft die folgenden Schritte umfasst:
- Simulieren der ersten und der zweiten Messposition des Messarms (1), indem ein erstes simuliertes Modell des Messarms (1) verwendet wird, das die Biegung der Armsegmente (3, 5, 7) und/oder die Spiele (Jax6, Jrad6, Jax8, Jrad8, Jax10, Jrad10) in den Gelenkverbindungsachsen und/oder die Auflösung des Drehgebers (12, 13, 14, 15) berücksichtigt, und daraus Herleiten eines ersten Wertes der geometrischen Eigenschaft;
- Simulieren der ersten und der zweiten Messposition des Messarms (1), indem ein zweites perfektes Modell des Arms verwendet wird, das zumindest unendlich steife Armsegmente (3, 5, 7) und/oder Nullspiele (Jax6, Jrad6, Jax8, Jrad8, Jax10, Jrad10) in mindestens einer Gelenkverbindungsachse und/oder eine konstante Auflösung des Drehgebers (12, 13, 14,15) berücksichtigt, und daraus Herleiten eines zweiten Wertes der geometrischen Eigenschaft;
- Berechnen einer Differenz zwischen der ersten und der zweiten Messung.

2. Verfahren nach Anspruch 1, umfassend den zusätzlichen Schritt des Übertragens eines Indikators bezüglich der bestimmten Genauigkeit an eine Bedienperson, die mit der Betätigung des angelenkten Messarms (1) betraut ist.

3. Verfahren nach Anspruch 2, bei dem der Indikator für die bestimmte Genauigkeit eines der folgenden Signale umfasst: farbige Kontrolllampe, Zahlenwert, Vibration, Tonsignal.

4. Verfahren nach Anspruch 1, bei dem das Verfahren den zusätzlichen Schritt des Bestimmens einer Messposition des angelenkten Messarms (1) umfasst, die zu einer Genauigkeit der Erfassung der geometrischen Eigenschaft führt, die einen Wert hat, der größer als ein vorgegebener Schwellwert ist.

5. Verfahren nach Anspruch 1, bei dem, unter Berücksichtigung, dass eine Messung zwischen zwei Punkten durchgeführt wurde, deren theoretische relative Positionen bekannt sind, Betätigungsanweisungen an die Bedienperson gegeben werden, derart, dass zwischen dem ersten Messpunkt und dem zweiten Messpunkt eine Bahn des angelenkten Messarms (1) erzeugt wird, die einer maximalen Genauigkeit der Erfassung der Koordinaten der Messpunkte entspricht.

6. Angelenkter Messarm (1), umfassend einen Messkopf (9) und Armsegmente (3, 5, 7), die mit Gelenkverbindungsachsen (4, 6, 8, 10) verbunden sind, die jeweils mit mindestens einem Drehgeber (12, 13, 14, 15) versehen sind, die mit einer Verarbeitungseinheit (16) verbunden sind, **dadurch gekennzeichnet, dass** die Verarbeitungseinheit (16) so ausgebildet ist, dass sie eine Genauigkeit der durchgeführten Erfassung einer geometrischen Eigenschaft in Abhängigkeit von der ersten und der zweiten Messposition des Arms gemäß einem der vorhergehenden Ansprüche bestimmt.

## Claims

1. Method for measuring a part using an articulated measurement arm (1) comprising a measurement head (9) provided with a pointing member and arm segments (3, 5, 7) connected to articulations (4, 6, 8, 10) respectively provided with at least one rotary coder (12, 13, 14, 15), comprising the steps of:
- focusing on a first measurement point on the part, the measurement arm (1) adopting a first measurement position;
- moving the measurement arm (1) to a second measurement position to focus on a second measurement point of the part and to capture a geometric feature of the part on the basis of the measurement points;
- determining a degree of precision of the capture of the geometric feature as a function of the first and second measurement positions of the arm, determining the degree of precision of the capture of the geometric feature comprising the following steps:
- simulating the first and second measurement positions of the measuring arm (1) using a first simulated model of the measuring arm (1) taking into account bending of the arm segments (3, 5, 7) and/or the plays (Jax6, Jrad6, Jax8, Jrad8, Jax10, Jrad10) on the articulation axes and/or the resolution of the rotary coder (12, 13, 14, 15), and deducing therefrom a first value of the geometric feature;
- simulating the first and second measurement positions of the measuring arm (1) using a perfect second model of the arm taking into account at least the infinitely rigid arm segments (3, 5, 7) and/or the zero plays (Jax6, Jrad6, Jax8, Jrad8, Jax10, Jrad10) on at least one articulation axis and/or a constant resolution of the rotary coder (12, 13, 14, 15) and deducing therefrom a second value of the geometric feature;
- calculating a difference between the first and second measurements.

2. Method according to claim 1, comprising the further step of sending an indicator relating to the determined degree of precision to an operator in charge of moving the articulated measurement arm (1).

3. Method according to claim 2, in which the indicator relating to the degree of precision of the measurement includes one of the following signals: coloured lamp, numerical value, vibration, audible signal.

4. Method according to claim 1, comprising the further step of determining a measurement position of the articulated measurement arm (1) resulting in a degree of precision of the capture of the geometric feature having a value greater than a predetermined threshold.

5. Method according to claim 1, in which once a measurement has been taken between two points of which the theoretical relative positions are known, movement instructions are provided to the operator to define a path of the articulated measurement arm (1) between the first measurement point and the second measurement point providing a maximum degree of precision of the capture of the coordinates of the measurement points.

6. Articulated measurement arm (1) comprising a measurement head (9) and arm segments (3, 5, 7) connected to articulations (4, 6, 8, 10) respectively provided with at least one rotary coder (12, 13, 14, 15) connected to a processing unit (16), **characterised in that** the processing unit (16) is adapted to determine a degree of precision of the capture of a geometric feature as a function of first and second measurement positions of the arm according to any one of the preceding claims.
